Europäisches Patentamt

European Patent Office

Office européen des brevets

(19)

(11) Publication number: **0 480 080 A1**

# EUROPEAN PATENT APPLICATION

(12)

(21) Application number: **90119288.0**

(22) Date of filing: **08.10.90**

(51) Int. Cl.⁵: **B05B 12/08**, B05B 12/14, G05D 7/06

(43) Date of publication of application:
**15.04.92 Bulletin 92/16**

(84) Designated Contracting States:
**DE FR GB**

(71) Applicant: **Trinity Industrial Corporation
4-1, Marunouchi 2-chome Chiyoda-ku
Tokyo(JP)**

(72) Inventor: **Achiwa, Noriyuki, c/o Trinity
Industrial Corp.
9, Kakimoto-cho 1-chome
Toyota-shi, Aichi(JP)**
Inventor: **Yamaguchi, Masanobu, c/o Trinity
Industrial Corp.
9, Kakimoto-cho 1-chome
Toyota-shi, Aichi(JP)**

(74) Representative: **Patentanwälte Dipl.-Ing. W.
Dahlke Dipl.-Ing. H.-J. Lippert
Frankenforster Strasse 137
W-5060 Bergisch Gladbach 1(DE)**

(54) **Coating apparatus.**

(57) A coating apparatus having a valve means disposed to a paint supply line extended from a paint supply source to a coating machine for controlling the flow rate of a paint in accordance with the flow rate of a paint discharged from the coating machine, wherein the valve means comprises a needle valve (6) which is urged to close a flow channel (8) of a paint by a spring, solenoid coils (14) actuatable to attract a movable core (12) secured to the needle valve (6) in the direction of opening the flow channel (8) against the resiliency of the spring (10) and a pulse generator (13) connected to the solenoid coils (14) for generating energizing pulses at a predetermined pulse period in accordance with the flow rate of a paint discharged from the coating machine when electric pulses are inputted to the solenoid coils (14).

*F I G. 6*

## BACKGROUND OF THE INVENTION

### (Field of the Invention)

The present invention concerns a coating apparatus having a valve disposed in a paint supply path extended from a coating supply source to a coating machine for controlling the flow rate of a paint in accordance with the amount of a paint discharged from the coating machine.

### (Description of the Prior Art)

In operation lines for coating automobiles, car bodies which are coated with various colors different from each other are transported at random and, accordingly, a multicolor coating apparatus is used for successively changing the color of paint sprayed from a coating machine depending on the color of paint designated for each car body.

For applying coating to each of the car bodies uniformly by the coating apparatus of this type, it is necessary to select a paint of each color supplied under pressure from a lot of paint supply sources by a color change valve device and to supply the thus selected paint of each color at a predetermined constant flow rate to the coating machine in accordance with the flow rate of a paint discharged from the coating machine. In view of the above, in the prior art, a pressure control valve (air-operated paint regulator) has been disposed on each of paint supply pipelines for supplying the paint of each color under pressure from each of paint supply sources to the color change valve device, or a pressure control valve has been disposed to a paint pipeline such as a paint hose that connects the coating machine with the color change valve device, and the flow rate of the paint supplied to the coating machine has been controlled by adjusting the opening degree of the pressure control valve (refer, for example, to Japanese Patent Publication Sho 59-1106 and Japanese Patent Laid Open Sho 60-61077).

It has also been proposed to dispose a gear pump, instead of the pressure control valve, to a paint pipeline that connects the coating machine with the color change valve device and controls the flow rate of the paint by controlling the number of rotation of the gear pump (refer to Japanese Utility Model Laid Open Sho 63-290973).

However, since the means for adjusting the opening degree of the valve, for example, a pressure control valve can not precisely control the paint flow rate, it involves a drawback that high quality coating under accurate control for the flow rate of the paint discharged from the coating machine is impossible.

On the other hand, the gear pump has an excellent performance of supplying fluid at a constant flow rate and, accordingly, the flow rate of the paint can be controlled precisely by controlling the number of rotation of the gear pump. However, when the gear pump is disposed to the paint pipeline that connects the coating machine with the color change valve device, it requires troublesome cleaning for residual paint deposited to gears, etc. of the gear pump, resulting in a difficulty for rapid color change and, thus, reducing the coating productivity.

If the gear pump is disposed to each of the paint supply pipelines connected between the paint supply sources for the paints of respective colors and the color change valve device, and the flow rate of the paint is controlled by the gear pump disposed exclusively for the paint of each of the colors, cleaning operation for the inside of the gear pump can be saved upon color change. However, since this requires expensive gear pumps by the number corresponding to that of colors of the paints and, it results in a drawback of remarkably increasing the installation cost.

## OBJECT OF THE INVENTION

It is, accordingly, a technical object of the present invention to provide a coating apparatus capable of precisely coating the flow rate of a paint supplied to a coating machine in accordance with the flow rate of a paint discharged from the coating machine, as well as capable of rapidly changing the paint color, in particular, in a multi-color coating apparatus with no increase of installation cost.

## SUMMARY OF THE INVENTION

The foregoing object of the present invention can be attained by a coating apparatus having a valve means disposed to a paint supply means extended from a paint supply source to a coating machine for controlling the flow rate of a paint in accordance with the flow rate of a paint discharged from the coating machine, wherein the valve means comprises:

a needle valve for opening and closing a flow channel of a paint,

a spring for resiliently urging the needle valve in the direction of closing the flow channel of the paint,

a movable core secured integrally to the needle valve and movable under an electromagnetic force,

solenoid coils for moving the movable core in the direction of opening the flow channel of the paint against the resiliency of the spring when an electric pulse is inputted to the coils, and

an electric pulse generation means connected to the solenoid coils for generating electric pulses each of a predetermined pulse period in accordance with the flow rate of a paint discharged from the coating machine.

According to the present invention, when an electric pulse is inputted from the electric pulse generation means to the solenoid coils of the valve means for controlling the flow rate of the paint, the movable core energized by the solenoid coils is attracted against the resiliency of the spring and, consequently, the needle valve resiliently urged so far by the spring in the direction of closing the flow channel of the paint is moved in the direction opposite to the urging direction, to open the flow channel of the paint.

When the electric pulse from the electric pulse generation means is interrupted, the needle valve is urged by the resiliency of the spring in the direction of closing the flow channel of the paint again.

Therefore, when the electric pulse generation means generates electric pulses each at a predetermined pulse period, the needle valve is vibrated at a vibration cycle in accordance with the pulse rate, repeats rapid opening/losing operation and delivers the paint at a flow rate determined in accordance with the velocity of the opening/closing operation and the duration time of the electric pulses supplied to the solenoid coils.

Accordingly, when the duration or the period of pulses generated from the electric pulse generation means are changed to control the time of supplying electric pulses to the solenoid coils that determines the valve opening time and the velocity of the opening/closing operation of the needle valve, the flow rate of the paint supplied to the coating machine can be controlled precisely in accordance with the flow rate of the paint discharged from the coating machine.

In addition, since the valve means for controlling the flow rate of the paint by the opening/closing operation of the needle valve has no such complicate inner shape and structure as in the gear pump, when the apparatus is applied to the multi-color coating apparatus, rapid color change is possible with no troublesome cleaning.

In a preferred embodiment in which the valve means is disposed to each of paint supply pipelines that connects the paint supply source for the paint of each color and the color change valve device, or in another preferred embodiment in which it is used also as a color change valve disposed along the manifold of the color change valve device, cleaning for the inside of the valve upon color change is no more necessary and color can be changed more rapidly.

DESCRIPTION OF THE ACCOMPANYING DRAW-INGS

These and other objects, as well as advantageous features of the present invention will become more apparent by reading the following descriptions for preferred embodiments according to the present invention in conjunction with the appended drawings, wherein

Fig. 1 is an entire schematic view illustrating a preferred embodiment of the coating apparatus according to the present invention;

Fig. 2 is a cross sectional view of a valve means for controlling the flow rate of a paint used in the present invention;

Fig. 3 is a chart showing the duration and the period of electric pulses inputted to solenoid coils of the valve means.

Fig. 4 is a cross sectional view illustrating a modified embodiment of the valve means for controlling the flow rate of the paint;

Fig. 5 is an entire schematic view illustrating another embodiment of the coating apparatus according to the present invention; and

Fig. 6 is a cross sectional view for the valve means which is used both for the flow rate control and color change of the paint.

DESCRIPTION OF THE PREFERRED EMBODIMENTS OF THE INVENTION

The present invention will now be described by way of its preferred embodiments with reference to the drawings.

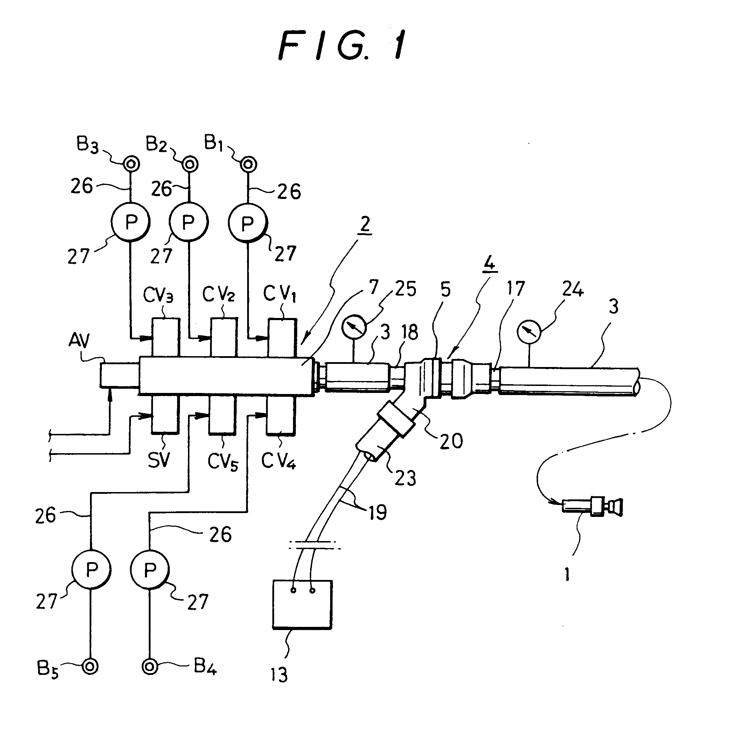

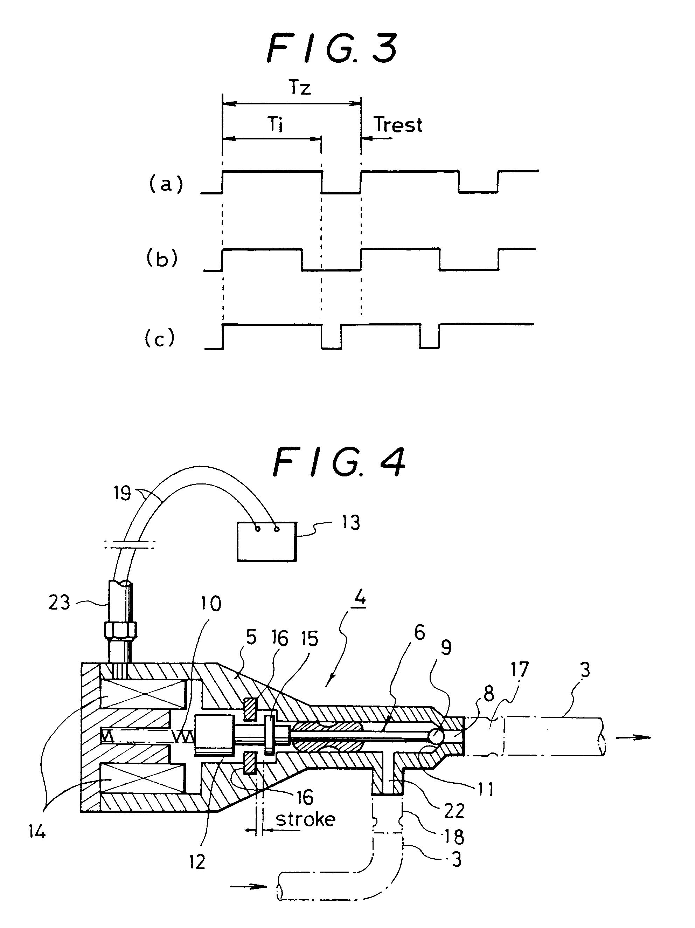

In a preferred embodiment of the present invention shown in Figs. 1 and 3, a multi-color coating apparatus is shown. In Fig. 1, a flow rate control valve means 4 is disposed in the midway of a paint pipeline 3, which is connected between a coating machine 1 and a color change valve device 2, for controlling the flow rate of a paint supplied to the coating machine 1 in accordance with the flow rate of a paint discharged from the coating machine 1.

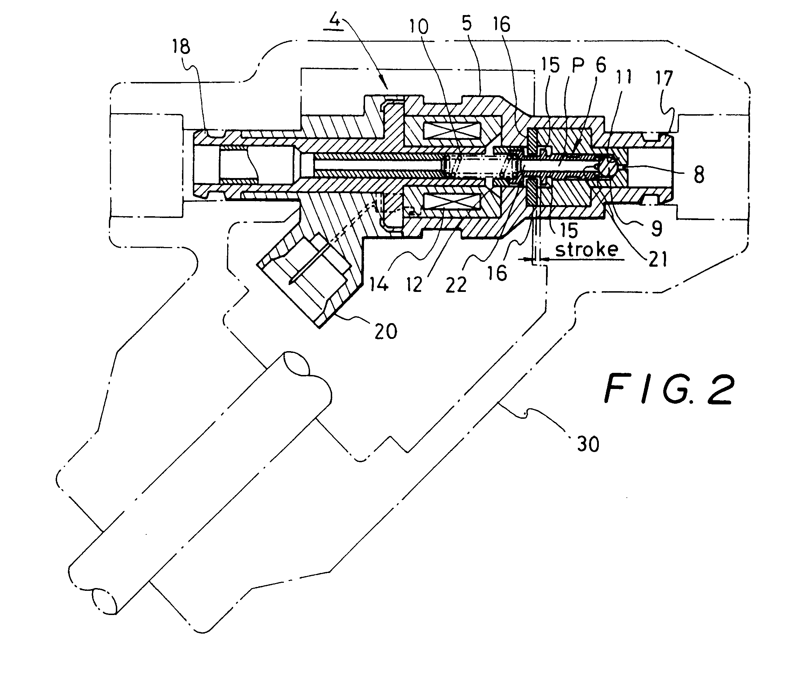

As shown in Fig. 2, the flow rate control valve means 4 has a needle valve 6 disposed in a valve body 5. A valve head 9 is secured to one end of the needle vale 6 for opening and closing a paint exit 8 that discharges a paint of each color selectively supplied from each of color change valves $CV_1$ - $CV_5$ arranged along a manifold 7 of the color change valve device 2. A movable core 12 is secured to other end of the needle valve 6 for abutting the valve head 9 against a valve seat 11 by the resiliency of a spring 10.

Disposed in the valve body 5, are solenoid coils 14 for lifting (leftward in the drawing) the movable core 12 against the resiliency of the spring 10 when electric pulses generated from an electric pulse generator 13 at a predetermined pulse period is inputted and a stopper 16 against which a flange 15 of the needle valve 6 is abutted when the latter is fully opened by the attraction of the movable core 12, so that the needle valve 6 moves by a stroke corresponding to a gap formed between the flange 15 and the stopper 16 to open and close the paint exit 8.

Further, the valve body 5 of the flow rate control valve means 4 shown in Fig. 2 has connectors 17 and 18 formed on both right and left ends each for connection with the paint pipeline 3, and an electric connector 20 disposed for connection with lead wires 19 that input the electric pulses generated from the electric pulse generator 13 to the solenoid coils 14. Further, an explosion-proof casing 30 is disposed to the outer side of the valve body 5 for covering the latter entirely.

The needle valve 6 comprises a tubular pipe P defining a paint channel therein, and the tubular pipe P has a paint discharge port, 21 formed at one end upstream to the valve body 9 made of steel ball and a paint inlet port 22 that formed at the other end toward the connector portion 18.

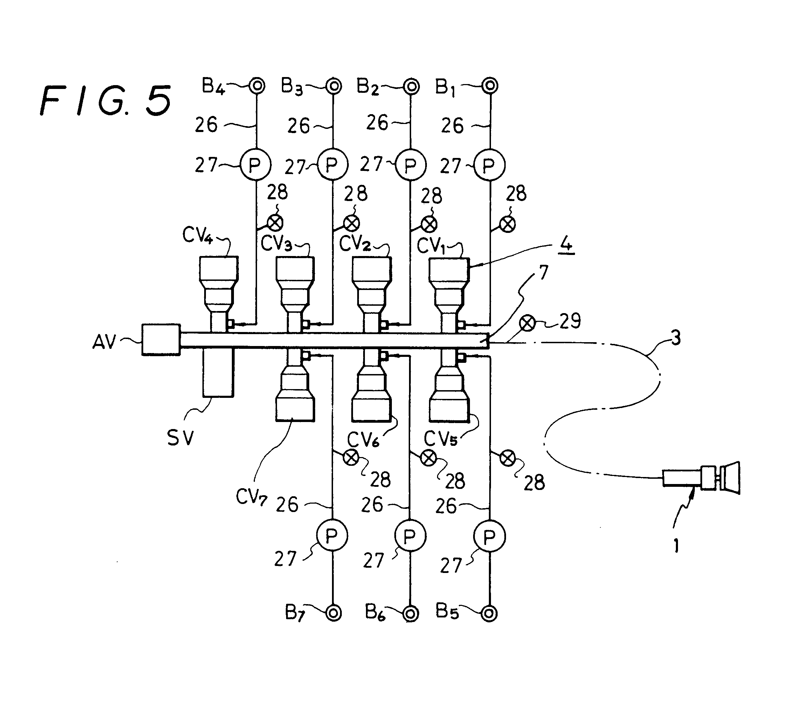

In a modified embodiment of the flow rate control valve means 4 shown in Fig. 4, a paint inlet port 22 is apertured through the circumferential wall of the valve body 5 near the valve head 9 of the needle valve 6, and a connector 18 is disposed to the paint inlet port 22 being protruded in the direction perpendicular to the connector 17 on the side of the paint exit 8, instead of forming the needle valve 6 with the tubular pipe P as in the previous embodiment.

The paint pipeline 3 or the pipeline 23 for lead wires 19 are made of electrically insulating material.

Then, as shown in Fig. 3(a), the electric pulse generator 13 is adapted to generate a train of electric pulses each comprising a unitary pulse period $T_z$ composed of a pulse duration rimw $T_i$ - (ON time) and a pulse rest time $T_{rest}$ (OFF time).

In this embodiment, when the electric pulse is inputted to the solenoid coils 14 of the flow rate control valve means 4 in Fig. 2 or Fig. 4, and the needle valve 6 opens the paint exit 6, the paint is discharged from the paint exit 8 to the coating machine 1. The flow rate of the paint discharged from the exit 8 depends on the stroke of the needle valve 6, the opening area of the paint exit 8, the pressure between the inside and the outside of the opening, etc. If such factors are predetermined, the discharge flow rate is determined by the valve opening period of the needle valve 6, that is, the duration time $T_i$ of the electric pulse.

The flow rate of the paint discharged per unit time by the opening/closing operation of the needle valve 6 is determined by the pulse duration time $T_i$ or the pulse period $T_z$.

Accordingly, as shown in Fig. 3, the flow rate of the paint supplied to the coating machine 1 can optionally be controlled either by changing the pulse duration time $T_i$ while fixing the pulse period $T_z$ constant, for example, to 10 ms ((a) and (b)), or by changing the pulse period $T_z$ while fixing the pulse duration time $T_i$ constant (c), in other words, by varying the pulse duty ratio.

By the way, for accurately opening/closing the needle valve 6 at a predetermined stroke, it is necessary in any of the above-mentioned methods, to properly set a certain rest time $T_{rest}$ (OFF time) between each of duration $T_i$ (ON time), and the rest time $T_{rest}$ of at least about 0.6 ms is necessary.

In a case where a paint selected in each of the color change valves $CV_1$ - $CV_5$ is supplied from the color change valve device 2 to the coating machine 1, electric pulses are inputted each at a duration $T_i$ and with a predetermined pulse period $T_z$ from the electric pulse generator 13 to the solenoid coils 14 of the flow rate control valve means 4 in accordance with the flow rate of a paint discharged from the coating machine 1 by which the needle valve 6 is vibrated at a high speed to repeat opening/closing operations for the paint exit 8, and the paint selected in each of the color change valves $CV_1$ - $CV_5$ of the color change valve device 2 is continuously supplied through the paint exit 8 to the coating machine 1 at a predetermined flow rate.

That is, the flow rate control valve means 4 is opened and closed at a predetermined opening/closing rate corresponding to the pulse period $T_z$ (or pulse rate) of the electric pulses inputted to the solenoid coils 14 and supplies the paint to the coating machine 1 at a predetermined flow rate which is determined in accordance with the opening/closing rate and the pulse duration $T_i$.

Accordingly, the flow rate of the paint supplied to the coating machine 1 can be controlled precisely and accurately by changing the pulse period $T_z$ or the pulse duration $T_i$ of the electric pulses generated from the electric pulse generator 13.

The stroke of the needle valve 6 for opening and closing the flow rate control valve 4 and the opening area of the paint exit 8 are always constant, but the pressure of the paint may sometimes fluctuate depending on the change of the viscosity, etc. Also in this case, accurate flow rate control can be attained by continuously detecting the change of the pressure by pressure sensors 24 and 25 disposed on both sides of the flow rate control valve means 4 and variably controlling the pulse period $T_z$ andthe pulse duration $T_i$ of the electric pulses generated from the electric pulse generator 13 in accordance with the change of the detected pressure.

In a case where a paint color is changed by interrupting the supply of a paint to the paint coating machine 1, all the color change valves $CV_1$ - $CV_5$ are closed and cleaning air and cleaning solution are supplied alternately from a cleaning air supply valve AV and a cleaning solution valve SO disposed to the manifold 7 of the color change valve device 2 while actuating the flow rate control valve means 4 and opening the paint exit 8.

In the embodiment described previously, the flow rate control valve mean 4 is disposed to the paint pipeline 3 that connects the coating machine 1 and the color change valve device 2. Alternatively, the flow rate control valve 4 may be disposed to each of the paint supply pipelines 26, 26, --- connected between each of the paint supply sources $B_1$, $B_5$ for the paint of each of colors and each of the color change valves $CV_1$ - $CV_5$ of the color change valve device 2 respectively, so that the flow rate of the paint supplied under pressure from each of the paint supply pipelines 26 to each of the color change valves $CV_1$ - $CV_5$ by means of a pump 27 may be controlled respectively.

In this modified embodiment, the color control valve means 4 is necessary by the number of paints of respective colors, but the installation cost is greatly reduced as compared with the case of using expensive gear pumps to the pumps 27, 27 --- for supplying the paints of respective colors by way of the color change valves $CV_1$ - $CV_5$ to the coating machine 1 respectively.

Further, the flow rate control valve means 4 shown in Figs 2 and 4 can be served also as each of the color change valves $CV_1$ - $CV_5$ by connecting a paint supply pipeline 26 to the paint inlet port 22, while connecting the paint exit 8 thereof to the inside of the manifold 7 of the color change valve device 2.

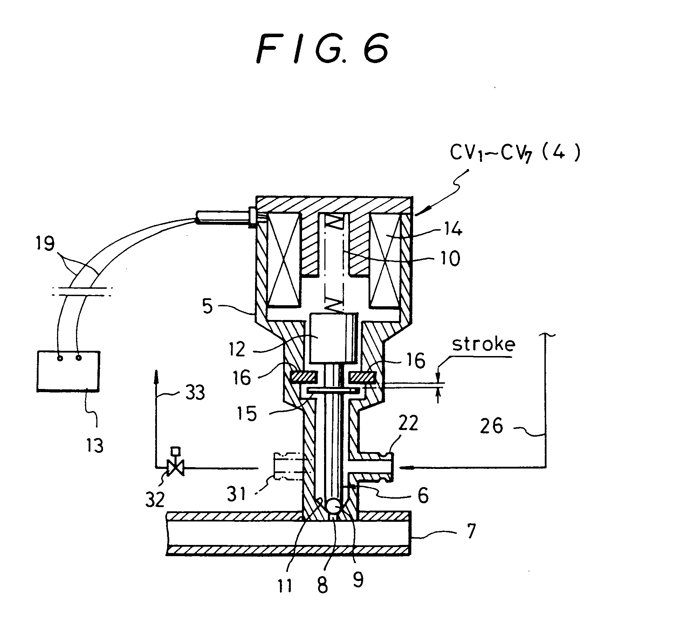

Fig. 5 is a schematic view illustrating a concrete embodiment of the entire apparatus and Fig. 6 is a cross sectional view illustrating one embodiment of the flow rate control valve means 4 used also as a color change valve. Each of the flow rate control valve means 4 constitutes each of the color change valves $CV_1$ - $CV_7$ disposed along the manifold 7 of the color change valve device 2 as shown in Fig. 5.

In this modified embodiment, each of the flow rate control valve means 4 constituting each of the color change valves $CV_1$ - $CV_7$ respectively is connected at the paint inlet 22 thereof by way of a paint supply pipeline 26 with each of the paint flow supply sources $B_1$ - $B_7$ for each of the paints of different colors and connected at the paint exit 8 thereof by way of a paint pipeline 3 to the inside of the manifold 7 connected to the coating machine 1.

In a case where the color change valve, for example, valve $CV_1$ is opened to selectively send the paint which is supplied under pressure by the pump 27 from the paint supply source $B_1$ to the coating machine 1, electric pulses are inputted each at a pulse duration $T_i$ and a predetermined pulse period $T_z$ in accordance with the flow rate of a paint discharged from the coating machine 1 to the solenoid coils 14 of the color change valve $CV_1$, and the paint is continuously delivered at a predetermined flow rate from the paint exit 8, which is rapidly opened and closed by the vibrations of the needle valve 6, to the inside of the manifold 7.

In this case, although the stroke of the needle valve 6 and the opening area of the paint exit 8 are always constant, the pressure of the paint supplied under pressure by the pump 27 may sometimes fluctuate depending on the change of the viscosity, etc. In such a case, the pressure of the paint supplied under pressure to the color change valve, for example, valve $CV_1$ and the pressure at the inside of the manifold 7 are detected by pressure sensors 28, 29, and the pulse duration $T_i$ and the pulse period $T_z$ of the electric pulses generated from the electric pulse generator 13 are variously controlled appropriately in accordance with the change of the pressure detected.

In this embodiment having such a constitution, the color change valves $CV_1$ - $CV_7$ can change the color of the paint supplied to the coating machine 1, as well as can control the flow rate of the paint. In addition, since the flow rate is controlled not by the change of the valve opening degree as in the case of using the pressure control valve in the prior art but by changing the opening/closing rate of the valve, the flow rate of the paint supplied to the coating machine 1 can be controlled precisely and accurately.

Further, upon completion of the paint coating, each of the color change valves $CV_1$ - $CV_7$ is automatically closed by the abutment of the valve head 9 of the needle valve 6 against the valve seat 8 by the resiliency of the spring 10. In addition, since there is no requirement for cleaning the inside of each of the closed color change valves $CV_1$ - $CV_7$, excess cleaning time is no more required.

If it is intended to circulate the paint for each of the colors supplied under pressure from each of the paint supply sources $B_1$ - $B_7$ through each of the paint supply pipelines 26, as it is, to the paint supply sources $B_1$ - $B_7$, the paint can be circulated by disposing a paint circulation port 31 to the valve body 5 for each of the color change valves $CV_1$ - $CV_7$, and connecting a paint circulation pipeline 33 by means of an ON-OFF valve 32 between the paint circulation port 31 and each of the paint supply sources $B_1$ - $B_7$.

As has been described above, the coating apparatus according to the present invention can provide excellent effects capable of precisely and accurately controlling the flow rate of a paint supplied to the coating machine and providing high quality coating without using an expensive gear pump, etc.

Furthermore, if the present invention is applied to a multi-color coating apparatus, it can also provide excellent effect capable of precisely controlling the flow rate of the paint of each color, as well as rapidly changing the color of the paint.

## Claims

1. A coating apparatus having a valve means disposed to a paint supply means extended from a paint supply source to a coating machine for controlling the flow rate of a paint in accordance with the flow rate of a paint discharged from the coating machine, wherein the valve means comprises:

   a needle valve for opening and closing a flow channel of a paint,

   a spring resiliently urging said needle valve in the direction of closing the flow channel of said paint,

   a movable core secured integrally to said needle valve and movable under an electromagnetic force,

   solenoid coils for moving said movable core in the direction of opening said flow channel of the paint against the resiliency of said spring when an electric pulse is inputted to said coils and

   an electric pulse control means connected to said solenoid coils and generating electric pulses each of a predetermined pulse period in accordance with the flow rate of a paint discharged from said coating machine.

2. A coating apparatus as defined in claim 1, wherein the valve means is disposed in the midway of a paint pipeline that connects the coating machine with the color change valve device.

3. A coating apparatus as defined in claim 1, wherein the valve means is disposed to each of color supply pipelines that connects a paint supply source for the paint of each of colors with a color change valve device.

4. A coating apparatus as defined in claim 1, wherein the valve means is adapted to serve also for each of color change valves each disposed along the manifold of the color change valve device.

# F I G. 1

FIG. 2

EP 0 480 080 A1

# F I G. 3

# F I G. 4

FIG. 5

EP 0 480 080 A1

# F I G. 6

CV₁~CV₇ (4)

**European Patent Office**

**EUROPEAN SEARCH REPORT**

Application Number

**EP 90 11 9288**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 229 632 (MKS INSTRUMENTS, INC.)<br>* Column 2, lines 44-49; column 5, lines 6-12; column 6, lines 23-37,45-50; claims 1,7; fig. * | 1 | B 05 B 12/08<br>B 05 B 12/14<br>G 05 D 7/06 |
| Y | | 2 | |
| Y | ELECTRONICS & WIRELESS WORLD, no. 1614, April 1987, pages 415-420, Sutton, Surrey, GB; B. FRIEDMAN: "Modulated-pulse amplifiers revived"<br>* Page 415, lines 6-21; page 418, lines 30-52; page 419, lines 9-27; figures 1,2 * | 1 | |
| Y | EP-A-0 292 354 (SAMES S.A.)<br>* Column 2, lines 37-60; column 4, lines 31-42; figure 1 * | 2 | |
| A | FR-A-2 528 726 (SAMES S.A.)<br>* Page 2, lines 27 - page 3, line 2; page 3, line 33 - page 4, line 4; figures 1,2 * | 2,3 | |
| A | US-A-4 163 523 (VINCENT)<br>* Column 3, lines 18-32; figures 1,2 * | 4 | |

| | | | TECHNICAL FIELDS SEARCHED (Int. Cl.5) |
|---|---|---|---|
| | | | G 05 D<br>B 05 B |

The present search report has been drawn up for all claims

| Place of search | Date of completion of search | Examiner |
|---|---|---|
| The Hague | 27 March 91 | BREVIER F.J.L. |